# EUROPEAN PATENT SPECIFICATION

(11) **EP 3 018 652 B1**
(45) Date of publication and mention of the grant of the patent: **29.05.2024**
(21) Application number: 14819399.8
(22) Date of filing: 16.04.2014
(51) Int. Cl.: G09G 3/36, G09F 9/30, G06F 1/16, G06F 3/041, G06F 3/04886, G09G 3/00

(54) **SCREEN HAVING CHANGEABLE DISPLAY AREA, MOBILE TERMINAL, AND SCREEN DISPLAY METHOD**
BILDSCHIRM MIT VERÄNDERBAREM ANZEIGEBEREICH, MOBILES ENDGERÄT UND BILDSCHIRMANZEIGEVERFAHREN
ÉCRAN AYANT UNE ZONE D'AFFICHAGE MODIFIABLE, TERMINAL MOBILE, ET PROCÉDÉ D'AFFICHAGE D'ÉCRAN

(30) Priority: 02.07.2013 CN 201310274068
(43) Date of publication of application: 11.05.2016
(73) Proprietor: Huizhou TCL Mobile Communication Co., Ltd., Huizhou, Guangdong 516006 (CN)
(72) Inventor: ZHAO, Shiqing, Huizhou Guangdong 516006 (CN)
(74) Representative: Murgitroyd & Company
(86) International application number: PCT/CN2014/075447
(87) International publication number: WO 2015/000319

(56) References cited:
- CN-A- 1 701 349
- CN-A- 101 887 663
- CN-A- 103 399 616
- GB-A- 2 496 920
- JP-A- H11 272 205
- US-A1- 2007 146 243
- US-A1- 2011 176 260
- US-A1- 2012 050 075
- US-A1- 2013 127 917
- US-A1- 2013 127 918
- US-A1- 2013 154 970

## Description

The present invention relates to screen technologies, in particular to a screen capable of varying the display area, a mobile terminal and a screen display method thereof.

Due to the rapid development of semiconductor technologies, electronic components and parts used by portable mobile terminals, such as cell phones, tablets, etc., are highly integrated, have increasingly small sizes and occupy very small space in cell phones and tablets; in addition, the electronic components and parts have increasingly high compatibility and universality, and most functions are the same for cell phones and tablets. Currently, cell phones and tablets have different screen sizes, which determine the purchase inclination and use demand of users to a great extent. From example, due to the relatively small screen of a smartphone, it is easily carried around and often used for making phone calls, taking photos and reading novels. Due to relatively big screens, on the other hand, tablets are more suitable for browsing webpages, playing games and watching TV.

Along with the improved living standard and the requirements of work and life, many users often own cell phones and tablets at the same time; the cell phone is convenient for communication and the tablet is used for entertainment. To carry these two types of mobile terminals at the same time, it is also necessary to carry their accessories, such as batteries, data cables and chargers; as a result, the weight to be carried is increased, and it is relatively inconvenient to place and retrieve the data cable. Due to different needs, moreover, the purchase of both a cell phone and a tablet will increase a user's consumption cost; at the same time, the data plan fee for using the cell phone and tablet will increase correspondingly. US20120050075A1 proposes a device including a display screen extendable to present an extended portion comprising display pixels configured to display content using the content signals. US20130127917A1 proposes a display device including a flexible display having a flexible display panel and a flexible touch panel, and a housing configured to enclose the flexible display while allowing the flexible display to move relative to the housing such that a portion of the flexible display is drawn out of the housing and retracted into the housing.

US20130127918A1 proposes a flexible display apparatus and a method of displaying a User Interface, the flexible display apparatus includes an exposed area determining unit for determining an exposed screen area facing outwards with respect to the flexible display apparatus. US20110176260A1 proposes an electronic device comprising a flexible display with at least two extendable display sections, each display section being movable to an extended position. JP1999272205A proposes a display cell having a display area in which picture elements are arranged in the form of a matrix and driver integrated circuits applying display signals to the picture elements. GB2496920A proposes a smartphone device includes an OLED as touch screen display that allows its bending for the extension to tablet or reduction from tablet to smartphone thanks to its flexibility feature. US20070146243A1 proposes a variable-sized screen includes a support, at least one scrolling device and a flexible display, and the support has a fixing frame and a movable frame; when the support changes size through a retracted movement of the movable frame and the fixing frame, the flexible display also changes size correspondingly and the size of the screen becomes variable. These publications are prior art references for this field. However, such as an electronic device of US20110176260A1 cannot provide a simple to realize and accurate measurement of an unrolled area of a rolling screen, and such as strain gauges of JP1999272205A are dedicated sensors for calculating an unrolled area, resulting in increased costs.

Therefore, the prior art still needs to be improved.

In light of the above shortcomings of the prior art, the object of the present invention is to provide a screen capable of varying the display area, a mobile terminal and a screen display method thereof, which can arbitrarily vary the size of the display area such that one mobile terminal can be used as mobile terminals of different models and sizes. As a result, it expands the mobile terminal's compatibility.

This problem is solved according to the features of the independent claims. Further embodiments result from the depending claims.

The aforementioned characteristics, features and advantages of the invention as well as the way they are achieved will be further illustrated in connection with the following examples and considerations as discussed in view of the figures.
- Fig.l: illustrates the rolled mobile terminal having the screen capable of varying the display area according to the present invention.
- Fig.2: illustrates the unrolled mobile terminal having the screen capable of varying the display area according to the present invention.
- Fig.3: illustrates that the back of the rolling screen is in contact with a touch screen according to an embodiment of the present invention.
- Fig.4: is a flow chart of the screen display method for varying the size of the screen display area of the mobile terminal according to an embodiment of the

The present invention provides a screen capable of varying the display area, a mobile terminal and a screen display method thereof. To make the object, technical solution and effect of the present invention clearer and more specific, the present invention will be further described in detail below with reference to the accompanying drawings and embodiments. It should be understood that the specific embodiments herein are only used to describe the present invention, rather than to limit the present invention.

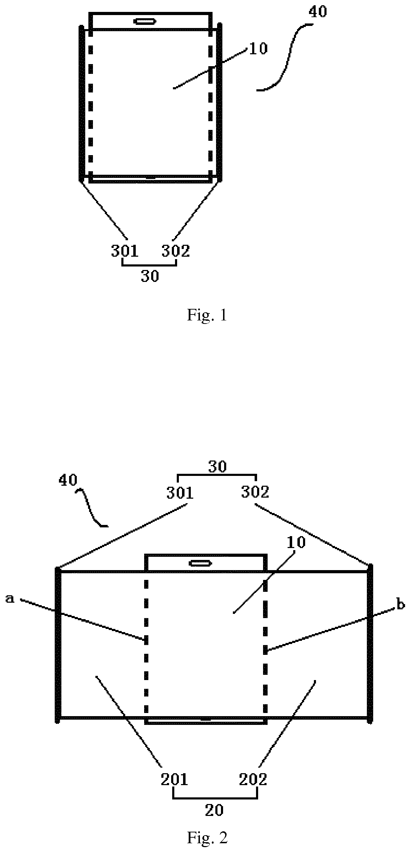

Please refer to Fig.1 and Fig.2 at the same time. The screen capable of varying the display area according to the present invention is arranged on a mobile terminal 40, which comprises a main screen 10, rolling screens 20 capable of being rolled into cylinders, rolling screen rotating shafts 30 for controlling the rolling or unrolling of the rolling screens 20, and a rolling screen sensor (not shown) for detecting the size of the unrolled area of the screen. The main screen 10 is arranged on the front of the mobile terminal 40, namely, the position where the current screen of the mobile terminal is.

There are two rolling screens, which are the left rolling screen 201 and the right rolling screen 202 from the direction in Fig.2, and are arranged at two sides, left and right, of the main screen 10, respectively. One side edge of the rolling screen 20 is connected with the main screen 10, namely, the left rolling screen 201 is connected with the left side of the main screen 10, and the right rolling screen 201 is connected with the right side of the main screen 10. There are two rolling screen rotating shafts 30, which are the left rolling screen rotating shaft 301 and the right rolling screen rotating shaft 302, respectively. The left rolling screen rotating shaft 301 is fixedly connected to the other side edge of the left rolling screen 201; the right rolling screen rotating shaft 302 is fixedly connected to the other side edge of the right rolling screen 202. The rolling screen sensor is arranged on the rolling screen 20.

It should be understood that the mobile terminal's screen consists of a display screen and a touch screen. The touch screen is arranged above the display screen, which is a transparent absolute positioning system and is the prior art. The screens according to the present invention, i.e. the main screen and the rolling screens, all consist of a flexible LCM (LCD Module, Liquid Crystal Display Module) display screen and a flexible Touch Panel touch screen, and the flexible touch screen is disposed above the flexible display screen. The touch screen is a capacitive touch screen or a resistive touch screen. In such a way, both the main screen and the rolling screens can implement the functions of display and touch, and have flexibility and are easy to be rolled.

To make the displayed image on the rolling screens 20 and the main screen 10 to be continuous, the rolling screens 20 are formed integrally with the main screen 10 in specific embodiments. In other words, the connection a between the left rolling screen 201 and the left side of the main screen 10 and the connection b between the right rolling screen 201 and the right side of the main screen 10 are continuous without a connection seam, and the rolling screens 20 and the main screen 10 are one plane. In such a way, the images at the connections between the rolling screens 20 and the main screen 10 do not have the splicing effect, and the image has good continuity and integrity.

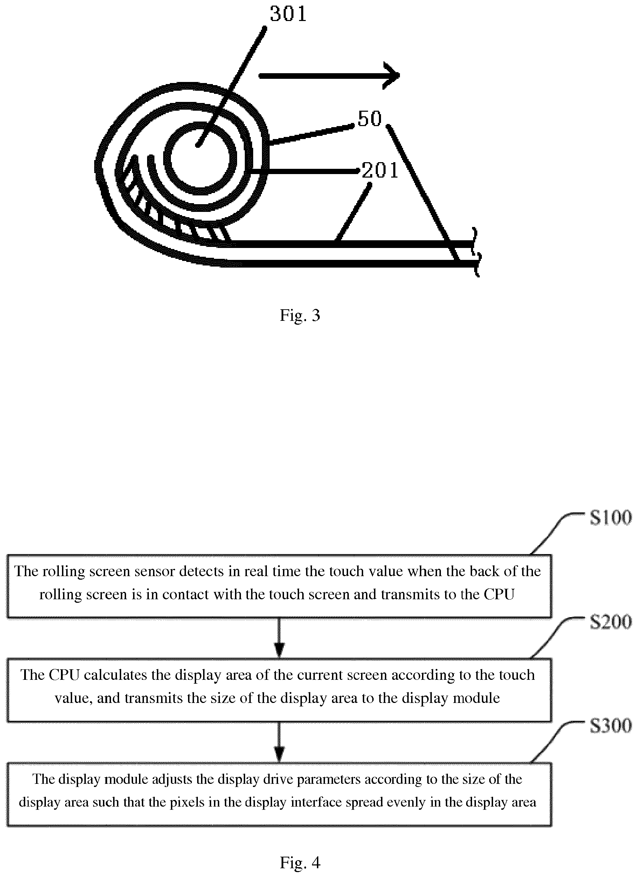

To detect the size of the unfolded screen, it can be determined by detecting how much of the rolling screens 20 has been rolled. In this embodiment, a conducting layer 50 is arranged on the back of the rolling screen 20, as shown in Fig.3, when the back of the rolling screen is in contact with the touch screen, the conducting layer 50 can implement the touch function, which is equivalent to a finger touching the touch screen, and at this moment, a corresponding touch capacitance or touch resistance will be formed. The rolling screen sensor detects the value of the touch capacitance or touch resistance and transmits to the CPU (Central Processing Unit) of the mobile terminal, which can determine the screen size. In this embodiment, the rolling screen sensor is arranged on the rolling screens 20, which is the same as the arrangement of sensors in touch screens according to the prior art and will not be described in detail herein.

The conducting layer 50 uses a material that can simulate human hand properties, such as a conductor or semi-conductor material. This material is evenly coated on the back of the rolling screen 20 to form the conducting layer 50, the back of the rolling screen is in contact with the touch screen, which is that the conducting layer 50 is in contact with the touch screen, since this material can simulate human hand properties, it is equivalent that a human hand touches the touch screen at this moment, producing a touch capacitor of certain capacitance or a touch resistor of certain resistance. The value of the touch capacitor or touch resistor is continuous in the touch range. According to the value of the touch capacitor or touch resistor detected by the rolling screen sensor, CPU can determine what parts of the rolling screens 20 are rolled.

It should be understood that when the rolling screens 20 are rolled, a part of the conducting layer 50 is exposed. One example is when the left rolling screen 201 is rolled, as the side view shown in Fig.3. For the purpose of easy illustration, there is a gap between the left rolling screen rotating shaft 301, the left rolling screen 201 and the conducting layer 50 in Fig.3, but in fact these three as closely attached to each other. It can be seen from Fig.3 that a touch capacitor or a touch resistor is formed when the conducting layer 50 is in contact with the left rolling screen 201 (equivalent to a touch screen), as shown by the shaded area in Fig.3. When the left rolling screen rotating shaft 301 continues to rotate toward the direction shown in Fig.3, the left rolling screen 201 is rolled, the contact area between the conducting layer 50 and the left rolling screen 201 is increased, and the area of the left rolling screen 201 that can display images is decreased. When the left rolling screen rotating shaft 301 rotates opposite to the direction shown in Fig.3, the left rolling screen 201 is unrolled, the contact area between the conducting layer 50 and the left rolling screen 201 is decreased, and the area of the left rolling screen 201 that can display images is increased.

In specific embodiments, the conducting layer 50 may use a conducting rubber. In such a way, it can both achieve the effect of human hand touching a touch screen, and protect the back of the rolling screen 20, in particular the part exposed during rolling; and at the same time, it avoids external pollution or scratches, for example, stains left when a human hand touches the back of the rolling screen 20, scratches due to the friction with other objects when placed in a bag, etc.

To roll or unroll the rolling screens 20 to a preset position, i.e. a position desired by a user, make the rolling screen rotating shafts 30 fixed and stationary, and keep the rolling screens 20 flat and stretched, a fixing and supporting layer is further arranged between the back of the rolling screen 20 and the conducting layer. The fixing and supporting layer is made of a rigid material, and may use aluminum foil or tin foil in specific embodiments. The rolling screens 20 thus formed are flexible and can be rolled, but can only be rolled or unrolled with certain strength, such that the rolling screen rotating shafts 30 can be fixed at a position desired by a user; moreover, the rolling screens 20 and the touch screen are closely attached and will not get loose; at the same time, the unrolled part of the rolling screens 20 can maintain the flat status without issues of sagging or tilting downward.

It should be understood that in addition to being unrolled laterally or rolled as shown in Fig.2, the rolling screens 20 may also be arranged on top and bottom sides or four sides, top, down, left and right, of the mobile terminal 40 according to the market need to expand the size of display area on the current mobile terminal's screen. It is preferred that the diameter of the rolling screen rotating shafts 30 is greater than the thickness of the rolling screens 20.

The present invention further provides a mobile terminal, comprising a CPU, a display module and the above screen capable of varying the display area. As shown in Fig.1 and Fig.2, the main screen 10 is arranged on the front of the mobile terminal 40, which has the same position as the current screen. The rolling screens 20 and the rolling screen rotating shafts 30 extend out of the mobile terminal 40. The rolling screens 20 may be unrolled or rolled by rotating the rolling screen rotating shafts 30, thereby varying the size of the display area of the mobile terminal 40. When the rolling screens 20 are rolled, its back contacts the touch screen to produce a touch capacitor or touch resistor. When the rolling screen sensor detects the value of the touch capacitance or touch resistance, it transmits to the CPU. The CPU connects the screen and the display module for identifying the size of the current screen according to the value detected by the rolling screen sensor. The display module implements display driving according to the screen size identified by the CPU such that the displayed image is displayed to the full screen of the current display area. Since the screen has been described in detail above, it will not be repeated herein.

Based on the above mobile terminal, the present invention further provides a screen display method, comprising:
S 100. The rolling screen sensor detects in real time the touch value when the back of the rolling screen is in contact with the touch screen and transmits to the CPU;
S200. The CPU calculates the display area of the current screen according to the touch value, and transmits the size of the display area to the display module;
S300. The display module adjusts the display drive parameters according to the size of the display area such that the pixels in the display interface spread evenly in the display area.

When the touch screen is a capacitive touch screen, the touch value is a touch capacitance; when the touch screen is a resistive touch screen, the touch value is a touch resistance. The principle of the production of a touch value and its quantity are the prior art. It should be noted that the touch value produced according to the present invention is continuous, as the contact area between the back of the rolling screen and the touch screen is one continuous whole piece, and the part of the touch screen shielded by the back of the rolling screen cannot display images. As a result, the CPU can calculate the display area of the current screen according to the detected touch value. The display module will adjust the display drive parameters in real time according to the size of the display area such that the display interface takes the full screen of the display area.

In summary, the present invention provides a screen capable of varying the display area, a mobile terminal and a screen display method thereof, said screen may be arbitrarily unrolled or rolled, and the display interface is automatically adjusted to the optimal size for display; when the rolling screens of the screen are fully rolled, the mobile terminal may be used as a cell phone; when the rolling screens are unrolled, the mobile terminal may be used as a cell phone or tablet of different sizes; a proper screen size may be selected according to different requirements, which makes it easy for a user to carry and use and expands the mobile terminal's compatibility; in addition, the display effect of both a cell phone and a tablet can be enjoyed on the same mobile terminal, which greatly reduces the cost and enhances fun and operability.

## Claims

1. A screen capable of varying the display area that is adapted to be arranged on a mobile terminal (40), wherein the screen comprises:
- a main screen (10) to be arranged on a front of the mobile terminal,
- two rolling screens (20, 201, 202) which are each configured to be rolled into a roughly cylinder shape and which are arranged at two sides of the main screen, respectively, such that one side edge of each rolling screen is connected (a, b) with the main screen,
- two rolling screen rotating shafts (30, 301, 302) that are fixedly connected to the other side edge of the rolling screen, respectively, for controlling the rolling or unrolling of the respective rolling screen, and **characterised by**
- a rolling screen sensor for detecting a value of a touch capacitance or a touch resistance to determine rolled areas of the rolling screens, so as to obtain a size of the unrolled area of the screen wherein the rolling screen sensor is arranged on the rolling screen,
- wherein both the main screen and the rolling screens form a flexible display screen and a flexible touch screen, the flexible touch screen is disposed above the flexible display screen, and the touch screen is a capacitive touch screen or resistive touch screen wherein the rolling screens further comprise a conducting layer (50) for forming the touch capacitance or the touch resistance when the back of the rolling screens is in contact with the respective touch screens; the conducting layer is arranged on the back of the respective rolling screen.

2. The screen capable of varying the display area according to claim 1, wherein the rolling screen is formed integrally with the main screen.

3. The screen capable of varying the display area according to any of the preceding claims, wherein the conducting layer is made of a conductor or semi-conductor material.

4. The screen capable of varying the display area according to any of the preceding claims, wherein the screen further comprises a fixing and supporting layer for rolling or unrolling the rolling screen to a preset position and keeping the rolling screen flat and stretched, and the fixing and supporting layer is arranged between the back of the rolling screen and the conducting layer.

5. The screen capable of varying the display area according to claim 4, wherein the fixing and supporting layer is made of a rigid material.

6. The screen capable of varying the display area according to any of claims 4 or 5, wherein the fixing and supporting layer is aluminum foil or tin foil.

7. A mobile terminal (40), comprising a CPU and a display module, wherein the mobile terminal further comprises the screen capable of varying the display area according to any one of claims 1 to 6, wherein the CPU connects the screen and the display module for identifying the size of the current screen display area; the display module implements display driving according to the screen size identified by the CPU such that the displayed image is displayed to the full screen of the current display area.

8. A screen display method for the mobile terminal according to claim 7, wherein the screen display method comprises:
A. The rolling screen sensor detects in real time the touch value when the back of the rolling screen is in contact with the touch screen and transmits to the CPU (S100);
B. The CPU calculates the display area of the current screen according to the touch value, and transmits the size of the display area to the display module (S200);
C. The display module adjusts the display drive parameters according to the size of the display area such that the pixels in the display interface spread evenly in the display area (S300).

## Patentansprüche

1. Ein Bildschirm, der fähig ist, den Anzeigebereich zu variieren, und angepasst ist, um auf einem mobilen Endgerät (40) angeordnet zu sein, wobei der Bildschirm Folgendes beinhaltet:
- einen Hauptbildschirm (10) zum Anordnen auf einer Vorderseite des mobilen Endgeräts,
- zwei Rollbildschirme (20, 201, 202), die jeweils konfiguriert sind, um grob in eine Zylinderform gerollt zu werden, und die jeweils an zwei Seiten des Hauptbildschirms angeordnet sind, sodass ein Seitenrand jedes Rollbildschirms mit dem Hauptbildschirm verbunden ist (a, b),
- zwei Rollbildschirmdrehstifte (30, 301, 302), die jeweils mit dem anderen Seitenrand des Rollbildschirms fest verbunden sind, um das Rollen oder Ausrollen des jeweiligen Rollbildschirms zu steuern, und **gekennzeichnet durch**:
- einen Rollbildschirmsensor zum Erkennen eines Werts einer Berührungskapazität oder eines Berührungswiderstands, um gerollte Bereiche der Rollbildschirme zu bestimmen, um eine Größe des ausgerollten Bereichs des Bildschirms zu erhalten, wobei der Rollbildschirmsensor auf dem Rollbildschirm angeordnet ist,
- wobei sowohl der Hauptbildschirm als auch die Rollbildschirme einen flexiblen Anzeigebildschirm und einen flexiblen Berührungsbildschirm bilden, wobei der flexible Berührungsbildschirm über dem flexiblen Anzeigebildschirm angeordnet ist und der Berührungsbildschirm ein kapazitiver Berührungsbildschirm oder Widerstandsberührungsbildschirm ist, wobei die Rollbildschirme ferner eine leitende Schicht (50) zum Bilden der Berührungskapazität oder des Berührungswiderstands beinhalten, wenn die Rückseite der Rollbildschirme in Kontakt mit den jeweiligen Berührungsbildschirmen steht; wobei die leitende Schicht auf der Rückseite des jeweiligen Rollbildschirms angeordnet ist.

2. Bildschirm, der fähig ist, den Anzeigebereich zu variieren, gemäß Anspruch 1, wobei der Rollbildschirm einstückig mit dem Hauptbildschirm gebildet ist.

3. Bildschirm, der fähig ist, den Anzeigebereich zu variieren, gemäß einem der vorhergehenden Ansprüche, wobei die leitende Schicht aus einem Leiter- oder Halbleitermaterial hergestellt ist.

4. Bildschirm, der fähig ist, den Anzeigebereich zu variieren, gemäß einem der vorhergehenden Ansprüche, wobei der Bildschirm ferner eine Befestigungs- und Tragschicht, um den Rollbildschirm in eine vorgegebene Position zu rollen oder auszurollen und um den Rollbildschirm flach und aufgespannt zu halten, beinhaltet und die Befestigungs- und Tragschicht zwischen der Rückseite des Rollbildschirms und der leitenden Schicht angeordnet ist.

5. Bildschirm, der fähig ist, den Anzeigebereich zu variieren, gemäß Anspruch 4, wobei die Befestigungs- und Tragschicht aus einem starren Material hergestellt ist.

6. Bildschirm, der fähig ist, den Anzeigebereich zu variieren, gemäß einem der Ansprüche 4 oder 5, wobei die Befestigungs- und Tragschicht Aluminiumfolie oder Stanniol ist.

7. Ein mobiles Endgerät (40), das eine Zentraleinheit und ein Anzeigemodul beinhaltet, wobei das mobile Endgerät ferner den Bildschirm, der fähig ist, den Anzeigebereich zu variieren, gemäß einem der Ansprüche 1 bis 6 beinhaltet, wobei die Zentraleinheit den Bildschirm und das Anzeigemodul zum Identifizieren der Größe des gegenwärtigen Bildschirmanzeigebereichs verbindet; wobei das Anzeigemodul Anzeigetreiber gemäß der Bildschirmgröße, die von der Zentraleinheit identifiziert wird, implementiert, sodass das angezeigte Bild auf dem gesamten Bildschirm des gegenwärtigen Anzeigebereichs angezeigt wird.

8. Ein Bildschirmanzeigeverfahren für das mobile Endgerät gemäß Anspruch 7, wobei das Bildschirmanzeigeverfahren Folgendes beinhaltet:
A. der Rollbildschirmsensor erkennt in Echtzeit den Berührungswert, wenn die Rückseite des Rollbildschirms in Kontakt mit dem Berührungsbildschirm steht, und überträgt an die Zentraleinheit (S100);
B. die Zentraleinheit berechnet den Anzeigebereich des gegenwärtigen Bildschirms gemäß dem Berührungswert und überträgt die Größe des Anzeigebereichs an das Anzeigemodul (S200);
C. das Anzeigemodul passt die Anzeigetreiberparameter gemäß der Größe des Anzeigebereichs an, sodass sich die Pixel in der Anzeigeschnittstelle gleichmäßig in dem Anzeigebereich verteilen (S300).

## Revendications

1. Un écran apte à faire varier la zone d'affichage qui est adapté à être placé sur un terminal mobile (40), l'écran comprenant :
- un écran principal (10) destiné à être placé sur l'avant du terminal mobile,
- deux écrans enroulables (20, 201, 202) dont chacun est configuré pour être enroulé en une forme grossièrement cylindrique et qui sont placés au niveau de deux côtés de l'écran principal, respectivement, de telle sorte qu'un bord latéral de chaque écran enroulable soit relié (a, b) à l'écran principal,
- deux arbres rotatifs d'écran enroulable (30, 301, 302) qui sont reliés de manière fixe à l'autre bord latéral de l'écran enroulable, respectivement, pour commander l'enroulement ou le déroulement de l'écran enroulable respectif, et **caractérisé par**
- un capteur d'écran enroulable pour détecter une valeur d'une capacité tactile ou d'une résistance tactile afin de déterminer des zones enroulées des écrans enroulables, de façon à obtenir une taille de la zone déroulée de l'écran, le capteur d'écran enroulable étant placé sur l'écran enroulable,
- dans lequel aussi bien l'écran principal que les écrans enroulables forment un écran d'affichage flexible et un écran tactile flexible, l'écran tactile flexible est disposé au-dessus de l'écran d'affichage flexible, et l'écran tactile est un écran tactile capacitif ou un écran tactile résistif, les écrans enroulables comprenant en outre une couche conductrice (50) pour former la capacité tactile ou la résistance tactile lorsque l'arrière des écrans enroulables est en contact avec les écrans tactiles respectifs ; la couche conductrice étant placée sur l'arrière de l'écran enroulable respectif.

2. L'écran apte à faire varier la zone d'affichage selon la revendication 1, dans lequel l'écran enroulable est formé d'un seul tenant avec l'écran principal.

3. L'écran apte à faire varier la zone d'affichage selon n'importe laquelle des revendications précédentes, dans lequel la couche conductrice est faite d'un matériau conducteur ou semi-conducteur.

4. L'écran apte à faire varier la zone d'affichage selon n'importe laquelle des revendications précédentes, l'écran comprenant en outre une couche de fixation et de support pour enrouler ou dérouler l'écran enroulable jusqu'à une position prédéfinie et maintenir l'écran enroulable à plat et tendu, et la couche de fixation et de support étant placée entre l'arrière de l'écran enroulable et la couche conductrice.

5. L'écran apte à faire varier la zone d'affichage selon la revendication 4, dans lequel la couche de fixation et de support est faite d'un matériau rigide.

6. L'écran apte à faire varier la zone d'affichage selon n'importe laquelle des revendications 4 et 5, dans lequel la couche de fixation et de support est une feuille d'aluminium ou une feuille d'étain.

7. Un terminal mobile (40), comprenant une CPU et un module d'affichage, le terminal mobile comprenant en outre l'écran apte à faire varier la zone d'affichage selon l'une quelconque des revendications 1 à 6, dans lequel la CPU est connectée à l'écran et au module d'affichage pour identifier la taille de la zone d'affichage actuelle de l'écran ; le module d'affichage met en oeuvre le pilotage d'affichage selon la taille d'écran identifiée par la CPU de telle sorte que l'image affichée soit affichée sur tout l'écran de la zone d'affichage actuelle.

8. Un procédé d'affichage sur écran pour le terminal mobile selon la revendication 7, le procédé d'affichage sur écran comprenant :
A. le capteur d'écran enroulable détecte en temps réel la valeur tactile lorsque l'arrière de l'écran enroulable est en contact avec l'écran tactile, et la transmet à la CPU (S100) ;
B. la CPU calcule la zone d'affichage de l'écran actuel selon la valeur tactile, et transmet la taille de la zone d'affichage au module d'affichage (S200) ;
C. le module d'affichage ajuste les paramètres de pilotage d'affichage selon la taille de la zone d'affichage de telle sorte que les pixels dans l'interface d'affichage s'étalent uniformément dans la zone d'affichage (S300).
